# EUROPEAN PATENT APPLICATION

(11) **EP 4 851 812 A1**
(43) Date of publication of application: **09.12.2026**
(21) Application number: 25224468.6
(22) Date of filing: 17.12.2025
(51) Int. Cl.: G06F 12/0811, G06F 9/455, G06F 12/0813, G06F 12/084, G06F 9/54, G06F 12/0842, G06F 9/50

(54) **NON-TRANSITORY MACHINE-READABLE STORAGE MEDIUM, METHOD AND APPARATUS FOR PLACEMENT OF VIRTUAL PROCESSORS**

(30) Priority: 06.06.2025 US 202519230127
(71) Applicant: INTEL Corporation, Santa Clara, CA 95054 (US)
(72) Inventor: REZA, Sajjid, Chandler, 85249 (US); GOLLAKOTI, Nareshkumar, 560087 Bangalore, Karnataka (IN)
(74) Representative: 2SPL Patentanwälte PartG mbB

(57) **Abstract**

Techniques are disclosed for improving virtual machine performance through vCPU placement. A configuration policy maps workload types to shared cache placement modes, including strict and relaxed modes. A workload type associated with a virtual machine (VM) is identified, and a corresponding cache placement mode is selected based on the policy. Virtual CPUs (vCPUs) of the VM are then assigned to hardware processing cores according to the selected mode, enabling optimized use of shared cache resources based on workload characteristics and system topology.

## Description

### Background

Some computing systems often consist of multiple processing units organized in hierarchical structures, where subsets of cores may share certain hardware resources such as caches. These shared resources are designed to improve efficiency and performance across different workloads. In virtualized environments, software layers manage the allocation of processing resources to virtual machines (VMs), mapping virtual processing units to physical ones.

### Brief description of the Figures

Some examples of apparatuses and/or methods will be described in the following by way of example only, and with reference to the accompanying figures, in which
Fig. 1 illustrates a method 100 for cache management of an example of the application.
Fig. 2 illustrates a method 100A for cache management of an example of the application.
Fig. 3 illustrates a method 200 for cache management of an example of the application.
Fig. 4 illustrates a method 200A for cache management of an example of the application.
Fig. 5 illustrates a block diagram of a CPU topology of an example of the application.
Fig. 6 illustrates default vCPU placements overtime of an example of the application.
Fig. 7 illustrates a 2-module strict shared mode of an example of the application
Fig. 8 illustrates a 2-module relaxed shared mode of an example of the application.
Fig. 9 illustrates a block diagram of apparatus 900 of an example of the application.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures identical or similar reference numerals refer to identical or similar elements and/or features, which may be identical or implemented in a modified form while providing the identical or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the identical combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the identical function. If a function is described below as implemented using multiple elements, further examples may implement the identical function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example," "various examples," "some examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage medium accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the identical or different examples. Furthermore, the terms "comprising," "including," "having," and the like, as used with respect to examples of the present disclosure, are synonymous.

**In** some examples, each core in a server platform or a server may have private Level 1 (L1) and Level 2 (L2) caches, with a shared Level 3 (L3) cache. However, a new class of servers are emerging, where multiple cores form a module with a shared L2 cache.

By default, hypervisors tend to distribute virtual CPUs (vCPUs) of virtual machines (VMs) across different modules, often favoring private L2 cache placement. However, depending on the workload, this default behavior may not always yield optimal performance. Some workloads benefit significantly from shared L2 caches, while others perform better with private L2 caches.

For example, workloads like server-side Java and in-memory databases may achieve up to 9% better performance when placed in VMs with shared L2 caches. In contrast, a workload of Al inference tasks like ResNet50 may achieve performance gains of up to 4% with private L2 caches compared to default placements.

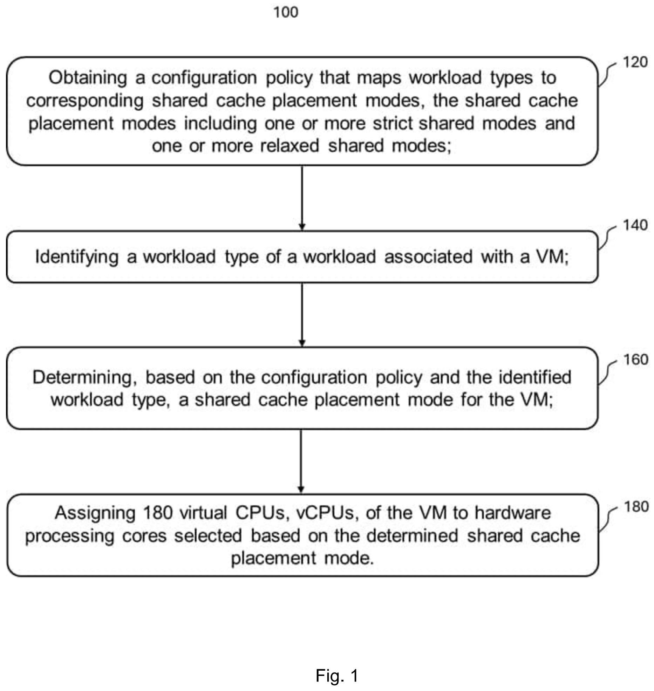

Fig. 1 illustrates a method 100 for cache management of an example of the application. Method 100 may be implemented when a machine executes some machine-readable instructions stored in a non-transitory medium. In a specific example, executing the machine-readable instructions may cause the machine to implement a controlling module configured to perform method 100.

Method 100 may include obtaining 120 a configuration policy that maps workload types to corresponding shared cache placement modes, the shared cache placement modes including one or more strict shared modes and one or more relaxed shared modes. Furthermore, method 100 may include identifying 140 a workload type of a workload associated with a virtual machine, VM and determining 160, based on the configuration policy and the identified workload type, a shared cache placement mode for the VM. Moreover, method 100 may include assigning 180 virtual CPUs, vCPUs, of the VM to hardware processing cores selected based on the determined shared cache placement mode. Method 100 may assign vCPUs of different VMs in different ways, rather than in one same way. A plurality of shared cache placement mode may correspond to a plurality of workload types, where one or more workload types may be corresponding to one of several shared cache placement modes, which will lead to good performance for the one or more workload types.

In some examples, in each of the shared cache placement modes, the vCPUs are assigned to a plurality of hardware processing cores sharing a common cache resource. The plurality of hardware processing cores, each assigned a vCPU, are distributed across a plurality of core modules. In contrast, a private cache placement mode may refer to a mode where vCPUs are assigned to a plurality of hardware processing cores respectively using their own exclusive cache resources. In the private cache placement mode, hardware processing cores do not share a common cache resource. The hardware processing cores may be cores of one or more multiple-core processors, and/or a plurality of single-core processors. A core module may refer to a module capable of including a plurality of the hardware processing cores.

In some examples, in each of the strict shared modes, each vCPU is assigned to a distinct hardware processing core, and each vCPU is fixed to a different hardware processing core. Because each vCPU is exclusively fixed to one core and cannot be migrated to another core, this mode may be called "strict." In some examples, in each of the relaxed shared modes, each vCPU is assigned to a distinct hardware processing core and is migratable to a different hardware processing core, where the migration is within one core module. Because the vCPU may be migrated to another core, this mode is more flexible than the strict mode and therefore may be considered "relaxed."

In some examples, oversubscription is implemented in at least one of the shared cache placement modes. The oversubscription refers to a case where m vCPUs are assigned to n hardware processing cores, with m>n, such that two or more vCPUs are scheduled on one hardware processing core at different time slots, where m and n are two natural numbers. For example, 10 vCPUs may be assigned to 5 hardware processing cores in an oversubscription mode. The 5 hardware processing cores may work for vCPU 1^{st} to 5^{th} of the 10 vCPUs at a first time slot and the 5 hardware processing cores may work for vCPUs 6^{th} to 10^{th} at a second time slot, where the second time slot is next to the first time slot. In the following time slots like slots 3, 4, 5...n, the 5 hardware processing cores may alternatively work for vCPU 1^{st} to 5^{th} and vCPUs 6^{th} to 10^{th} at different time slots.

In some examples, the configuration policy maps at least one of a server-side workload or an in-memory database workload to one of the strict shared modes. Server-side workloads may refer to computational tasks, processes, or operations that are executed on a server, rather than on a client device like a smartphone, laptop, or browser. The server-side workload may be a server-side Java workload, a server-side Python workload, or a server-side .Net workload. The strict shared mode mapped to at least one of the server-side workload or the in-memory database workload is a 2-module strict shared mode, where all vCPUs for the server-side workload or the in-memory database workload are assigned to 2 core modules. Because all the vCPUs are assigned to 2 core modules, the placement mode may be called a 2-module mode.

In some examples, the configuration policy maps an artificial intelligence (AI) inference workload to one of the relaxed shared modes. The relaxed shared mode mapped to the AI inference workload may be a 8-module relaxed shared mode, where all vCPUs for the AI inference workload are assigned to 8 modules. Because all the vCPUs are assigned to 8 core modules, the placement mode may be called a 8-module mode.

If all the vCPUs are assigned to x core modules, the placement mode may be called a x-module mode. The x-module may apply to each of the strict shared mode and the relaxed shared more. The x refers to a natural number, which may be an even number in some examples, such as 1, 2, 3, 4, 8, 12, 24, 32 and so on.

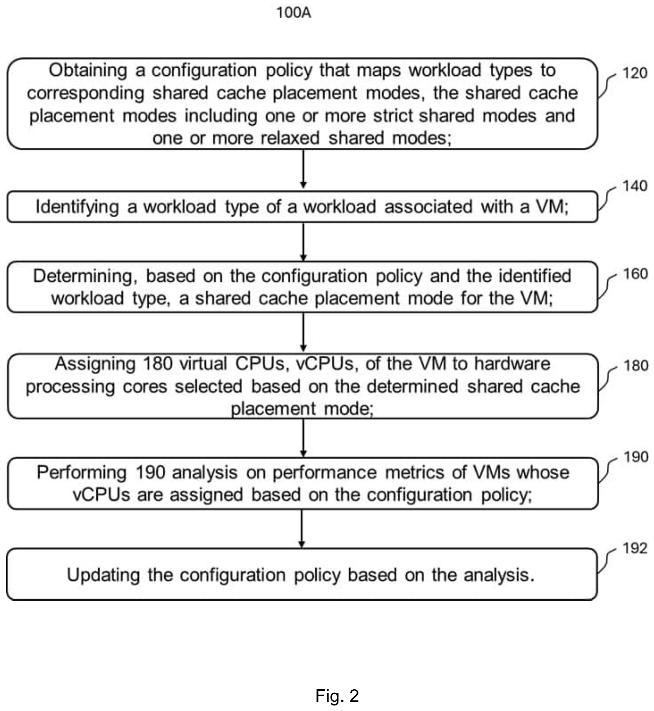

In some examples, the performance corresponding to the different placement modes may change over time. Therefore, method 100A as illustrated by Fig. 2 may include all operations included in method 100 and further include operations 190 and 192. The operation 190 may include performing analysis on performance metrics of VMs whose vCPUs are assigned based on the configuration policy. Operation 192 may include updating the configuration policy based on the analysis. Based on operations 190 and 192, the configuration policy may be updated over time, such that a workload may be mapped to a most efficient placement mode. For example, a 8-module relaxed shared mode may be mapped to the AI inference workload at a early stage. With time going on, the performance metrics of the VM implementing the Al inference workload is degraded while a test indicates that a different placement mode, such as a 4-module relaxed shared mode will render better performance for a VM implementing the same Al inference workload. Therefore, the configuration policy may be updated by mapping the 4-module relaxed shared mode to the Al inference workload. Therefore, when vCPUs of a new VM implement the Al inference workload are to be assigned, the assignment is to be made based on the updated configuration policy. According to the updated configuration policy, the vCPUs are assigned to hardware processing cores selected based on the 4-module relaxed shared mode. The performance metrics used in method 100A include one or more of: cache hit rate, execution throughput, latency, or vCPU migration frequency. The cache hit rate may refer to the percentage of memory accesses that are successfully served by the cache, rather than needing to go to slower main memory. Execution throughput may refer to the rate at which a processor or system completes instructions or tasks over time. It's a measure of computational efficiency. The latency may refer to time to fetch data from memory, time for a network request to get a response, or time from sending a CPU instruction to its result. vCPU migration frequency may refer to how often a virtual CPU (vCPU) is moved from one physical CPU core to another in a virtualized environment. In some examples, the cache in the above examples is an L2 cache.

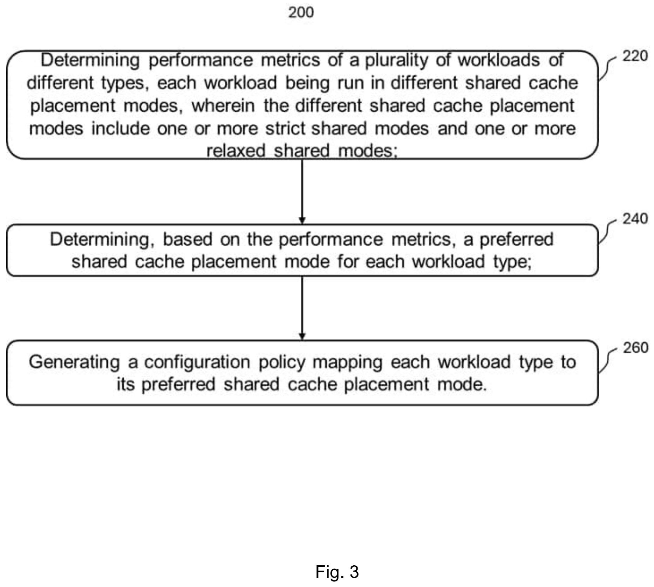

Fig. 3 illustrates a method 200 for cache management of an example of the application. Method 200 may be implemented when a machine executes some machine-readable instructions stored in a non-transitory medium. In a specific example, executing the machine-readable instructions may cause the machine to implement a policy module configured to perform method 200.

Method 200 may include determining 220 performance metrics of a plurality of workloads of different types, each workload being run in different shared cache placement modes, where the different shared cache placement modes include one or more strict shared modes and one or more relaxed shared modes. Method 200 may further include determining 240, based on the performance metrics, a preferred shared cache placement mode for each workload type; and generating 260 a configuration policy mapping each workload type to its preferred shared cache placement mode. Based on the generated configuration policy, vCPUs of a VM may be assigned to hardware processing cores placed in a mode rending better efficiency and capability for the VM, improving the efficiency of the VM.

**In** some examples, in each of the shared cache modes, vCPUs of a VM implementing a workload are assigned to a plurality of hardware processing cores sharing a common cache resource, wherein the plurality of hardware processing cores, each assigned a vCPU, are distributed across a plurality of core modules.

In contrast, a private cache placement mode may refer to a mode where vCPUs are assigned to a plurality of hardware processing cores respectively using their own exclusive cache resources. In the private cache placement mode, hardware processing cores do not share a common cache resource. The hardware processing cores may be cores of one or more multiple-core processors, and/or a plurality of single-core processors. A core module may refer to a module capable of including a plurality of the hardware processing cores.

In some examples, in each of the strict shared modes, each vCPU is assigned to a distinct hardware processing core, and each vCPU is disallowed to migrate to a different hardware processing core. Because each vCPU is exclusively fixed to one core and cannot be migrated to another core, this mode may be called "strict." In some other examples, in each of the relaxed shared modes, each vCPU is assigned to a distinct hardware processing core and is allowed to migrate to a different hardware processing core, wherein the migration is within one core module. Because the vCPU may be migrated to another core, this mode is more flexible than the strict mode and therefore may be considered "relaxed."

In some examples, oversubscription is implemented in at least one of the shared cache placement modes, the oversubscription refers to a case where m vCPUs are assigned to n hardware processing cores, with m>n, such that two or more vCPUs are scheduled on one hardware processing core at different time slots, where m and n are two natural numbers. For example, 10 vCPUs may be assigned to 5 hardware processing cores in an oversubscription mode. The 5 hardware processing cores may work for vCPU 1^{st} to 5^{th} of the 10 vCPUs at a first time slot and the 5 hardware processing cores may work for vCPUs 6^{th} to 10^{th} at a second time slot, where the second time slot is next to the first time slot. In the following time slots like slots 3, 4, 5...n, the 5 hardware processing cores may alternatively work for vCPU 1^{st} to 5^{th} and vCPUs 6^{th} to 10^{th} at different time slots.

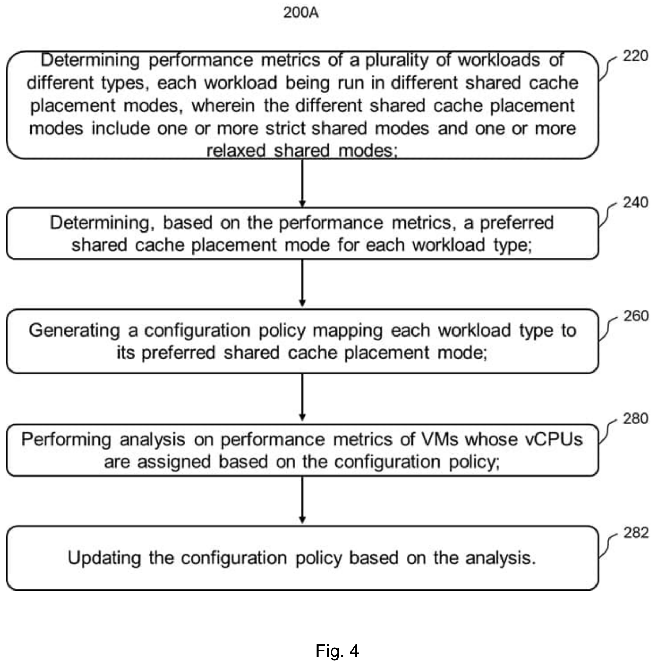

In some examples, the policy module may further update the configuration policy. In some examples associated with method 100A, the controlling module is configured to update the configuration policy. However, in some other examples, the configuration policy update may be implemented by the policy module. In some yet other examples, the updated may be implemented by both the controlling module and the policy module. In some examples associated with method 200A as illustrated by Fig. 4, which includes all operations of method 200, operations 280 and 282 are included. Operation 280 may include performing analysis on performance metrics of VMs whose vCPUs are assigned based on the configuration policy. Operation 282 may include updating the configuration policy based on the analysis. The policy module may further send the updated configuration policy to the controlling module, which is an entity implementing the policy.

In some examples, some or all the configuration policies used by the controlling module are generated by the policy module. In some other examples, some or all the configuration policies used by the controlling module are generated by the controlling module itself. In yet some other examples, the policy module may send an updated configuration policy to the controlling module, and the controlling module may further update the received configuration policy to obtain a further updated configuration policy.

In some examples, the configuration policy maps at least one of a server-side workload or an in-memory database workload to one of the strict shared modes. The server-side workload may refer to computational tasks, processes, or operations that are executed on a server, rather than on a client device like a smartphone, laptop, or browser. The server-side workload may be a server-side Java workload, a server-side Python workload, or a server-side .Net workload. The strict shared mode mapped to at least one of the server-side workload or the in-memory database workload is a 2-module strict shared mode, where all vCPUs for the server-side workload or the in-memory database workload are assigned to 2 core modules. Because all the vCPUs are assigned to 2 core modules, the placement mode may be called a 2-module mode.

In some examples, the configuration policy maps an artificial intelligence (AI) inference workload to one of the relaxed shared modes. The relaxed shared mode mapped to the AI inference workload may be a 8-module relaxed shared mode, where all vCPUs for the AI inference workload are assigned to 8 modules. Because all the vCPUs are assigned to 8 core modules, the placement mode may be called a 8-module mode.

If all the vCPUs are assigned to x core modules, the placement mode may be called a x-module mode. The x-module may apply to each of the strict shared mode and the relaxed shared more. The x refers to a natural number, which may be an even number in some examples, such as 1, 2, 3, 4, 8, 12, 24, 32 and so on.

The performance metrics used in methods 100 and 100A include one or more of: cache hit rate, execution throughput, latency, or vCPU migration frequency. The cache hit rate may refer to the percentage of memory accesses that are successfully served by the cache, rather than needing to go to slower main memory. Execution throughput may refer to the rate at which a processor or system completes instructions or tasks over time. It's a measure of computational efficiency. The latency may refer to time to fetch data from memory, time for a network request to get a response, or time from sending a CPU instruction to its result. vCPU migration frequency may refer to how often a virtual CPU (vCPU) is moved from one physical CPU core to another in a virtualized environment. In some examples, the cache in the above examples is an L2 cache.

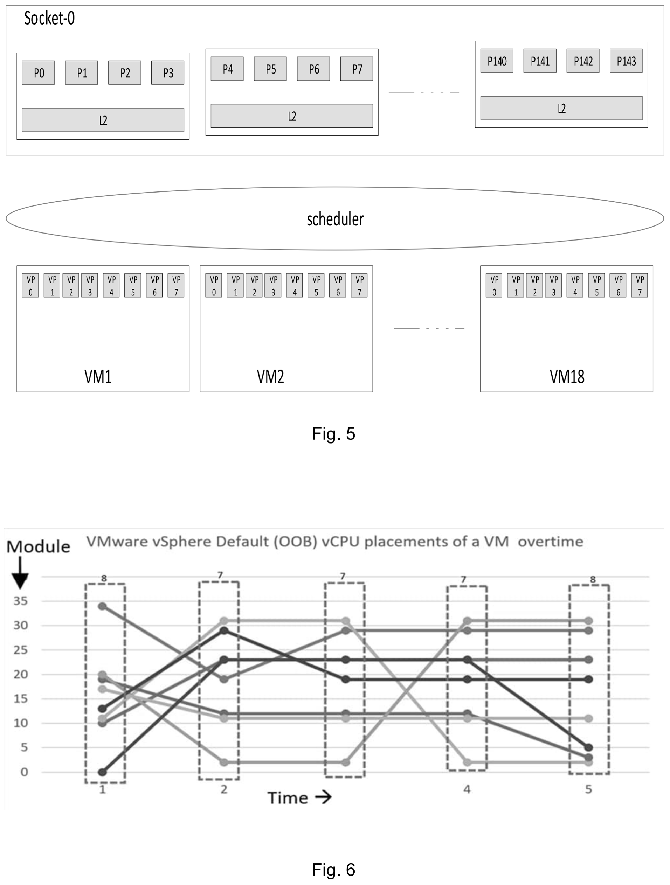

Fig. 5 illustrates a block diagram of a CPU topology of an example of the application. In some examples, the performance of 18 VMs is evaluated. As illustrated by Fig. 5, each of the 18 VMs is configured with 8 vCPUs, running various workloads. The evaluation is conducted on a server platform that includes 144 processor cores, with every 4 cores grouped into a module sharing a common L2 cache.

The vCPU placement may be implemented in several modes, such as a default mode, a 2-moduile strict shared mode, a 2-module relaxed shared mode, a 8-module strict shared mode and a 8-module relaxed shared mode. There may further be some other modes like 16-module strict shared mode, 32-module relaxed shared mode, and so on. With respect to the "x-module," the value of x may be 2, 4, 8, 16, 24, 32, 48, and so on.

Fig. 6 illustrates default vCPU placements overtime of an example of the application.

In an example of a default mode, vCPUs are placed across separate modules without any specific affinity constraints. During execution, vCPUs are permitted to migrate between cores and modules, which may result in a given 8-vCPU VM utilizing fewer than 8 distinct modules at any given time. As illustrated in Figure 6, one such VM occupies 8, 7, 7 7, and 8 modules at time intervals 1, 2, 3, 4 and 5, respectively. Additionally, Fig. 6 shows that vCPUs are actively migrating across different modules over time. The 8 dots the time interval 1 in Fig. 6 refer to 8v CPUs of the VM, where each vCPU is assigned to a module, none of them shares a module. At time interval 2, each of the 8 vCPUs migrates to a new module, where 2 of them share one module and the left 6 vCPUs do not share any module. Therefore, 8 vCPUs are assigned to 7 modules. The following migration at time intervals 3 to 5 may be understood based on Fig. 6 and the introduction to migration from interval 1 to interval 2.

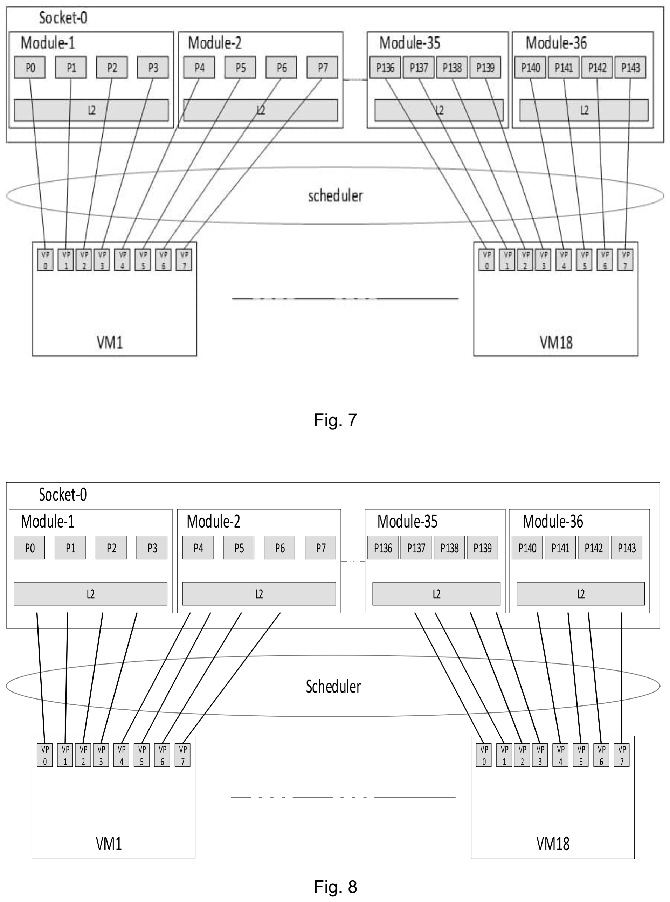

Fig. 7 illustrates a 2-module strict shared mode of an example of the application. As illustrated by Fig. 7, 8 vCPUs are assigned to 2 core modules comprising a total of 8 hardware processing cores. Each vCPU is pinned to a specific core within its assigned module and is not allowed to migrate to other cores during execution.

Fig. 8 illustrates a 2-module relaxed shared mode of an example of the application. As illustrated by Fig. 8, 8 vCPUs are assigned to 2 core modules comprising a total of 8 hardware processing cores. While each vCPU is restricted to a specific module, it is permitted to migrate between cores within that module during execution.

In an example of a 8-module strict shared mode, vCPUs are assigned to 8 distinct core modules, with one vCPU placed in each module. Each vCPU is pinned to a specific core within its respective module and is not allowed to migrate to other cores during execution.

In an example of a 8-module relaxed shared mode, 8 vCPUs are assigned to 8 distinct core modules, with each vCPU restricted to a specific module. Within its assigned module, each vCPU is allowed to migrate between different cores, but migration across modules is not permitted.

In some examples, the controlling module and/or the policy module may calculate and/or monitor the performance metrics of VMs of different types of workloads assigned in different placement modes and determine a preferred mode for each type of workload.

**Table 1**

| Workloads | Default (OOB) (a) | 2-Module Strict Mapping (b) | 2-Module Relaxed Mapping (c) | 8-Module Strict Mapping (d) | 8-Module Relaxed Mapping (e) | Perf gain with (b) over OOB | Perf gain with (c) over OOB | Perf gain with (d) over OOB | Perf gain with (e) over OOB |
|---|---|---|---|---|---|---|---|---|---|
| Server-side Java | 132804 | 145293 | 140897 | 139864 | 133355 | 1.09 | 1.06 | 1.05 | 1.00 |
| In Memory Database | 1516691 | 1607516 | 1581393 | 1475973 | 1475138 | 1.06 | 1.04 | 0.97 | 0.97 |
| A1 | 1462 | 1449 | 1496 | 1496 | 1517 | 0.99 | 1.02 | 1.02 | 1.04 |

As shown in Table 1, 3 types of workloads are implemented by VMs whose vCPUs are assigned in 5 cache placement modes. The 3 types of workloads include Sever-side Java workload, In Memory Database workload and Al inference workload. The 5 modes include the default mode (a), 2-Module Strict Mapping (b), 2-Module Relaxed Mapping (c), 8-Module Strict Mapping (d), and 8-Module Relaxed Mapping (e). 2-Module Strict Mapping (b) may be the 2-module strict shared mode, 2-Module Relaxed Mapping (c) may be the 2-module relaxed shared mode, 8-Module Strict Mapping (d) may be the 8-module strict shared mode, and 8-Module Relaxed Mapping (e) may be the 8-module relaxed shared mode.

As shown in Table 1, for the workload Sever-side Java, each of the x-module modes has better efficiency or performance than the default mode and 2-Module Strict Mapping (b) is the best among all modes. For the workload In Memory, 2-Module Strict Mapping (b) is still the best among all modes. For the workload AI inference, 8-Module Relaxed Mapping (e) is the best among all modes. The performance metrics in Table 1 may be calculated or monitored by the controlling module and/or policy module, or by a yet different module. Performance metrics like those presented in Table 1 may be obtained for a plurality of workloads and a preferred mode will be determined for each of the workloads based on the performance metrics.

In some examples, an algorithm for implementing strict or relaxed module-aware vCPU placements. This algorithm may be executed by a scheduler or implemented as a standalone script to establish vCPU affinity for virtual machines (VMs), ensuring alignment with desired core module placements and cache utilization patterns. The algorithm may be applied on a computing platform comprising multiple hardware resources organized hierarchically. Specifically, the platform may include S sockets, where each socket contains M core modules. Each core module, in turn, comprises C hardware processing cores, resulting in a total of C × M hardware processing cores per socket. The virtualization layer supports N virtual machines (VMs), and each VM, denoted as Vi, is configured with a specific number of vCPUs. To determine how these vCPUs are to be allocated, the number of core modules required for each VM is calculated as Vi divided by C, assuming an even distribution of vCPUs across hardware processing cores. This model serves as the basis for implementing cache-aware or module-aware vCPU placement strategies.

The algorithm begins by initializing the available system resources. For each socket in the platform, a list of core modules is defined. Each core module is equipped with a counter that tracks how many vCPUs have been assigned to it, with the counter initially set to zero. This structure enables monitoring of load distribution and identification of oversubscription conditions.

The process then proceeds to iterate over each VM. For a given VM Vi, the number of core modules required is computed as Vi/C, where C represents the number of hardware processing cores in each module. An empty list is initialized to store the core modules that will be assigned to that particular VM.

Core module assignment is conducted in a round-robin fashion across sockets to ensure balanced distribution. For each required module, the algorithm attempts to locate an available core module in the current socket (starting with socket 1). The selected core module is assigned to the VM regardless of its current usage state, thus allowing oversubscription where necessary. If the current socket does not have enough available modules, the algorithm continues searching in the next socket. Each successfully assigned core module is appended to the VM's list of assigned modules.

Following module assignment, vCPUs are allocated within the selected core modules. The algorithm continues allocating vCPUs until the total vCPUs of the VM are fully placed. In oversubscription cases, the total number of assigned vCPUs may exceed the physical core count within a module. If the strict shared mode is in use, each vCPU is pinned to a specific hardware processing core and is disallowed from migrating. In contrast, if the relaxed shared mode is used, vCPUs are permitted to migrate among the cores within their assigned core module, offering greater scheduling flexibility.

This assignment process is repeated for each remaining VM. After all the VMs have been processed, the algorithm returns a comprehensive mapping of core modules assigned to each VM. It also reports the vCPU count per module and identifies any core modules that are oversubscribed, enabling further performance tuning or analysis.

In some examples, another algorithm is provided. It is a module-aware allocation algorithm that optimizes vCPU placement in VMs with respect to cache locality. In particular, it prefers that each vCPU of a VM is placed on separate modules to maximize L2 cache locality over L2 sharing.

The algorithm may begin by initializing system resources: each physical socket in the system contains a list of modules, and each module tracks the number of vCPUs currently assigned to it. This setup enables fine-grained control over where each vCPU is placed.

For each VM, the algorithm assigns vCPUs to separate modules within a single socket. First, it selects a socket for the VM, exemplary using a round-robin method to distribute the load evenly across sockets. Then, it assigns each vCPU of the VM to a unique module within the selected socket. If the VM has more vCPUs than there are available modules in that socket, the algorithm allows controlled oversubscription by reusing modules, provided that this practice aligns with similar oversubscription policies applied to other sockets.

Once vCPU placement is complete, the algorithm returns a mapping of VMs to their respective modules, indicating which module each vCPU has been assigned to. The scheduler can then choose how to manage execution: it may either pin each vCPU to a specific core within the assigned module for strict control or allow relaxed migration within the cores of that module for more flexibility.

The module-aware placement strategy offers several benefits over traditional placement mechanisms that rely solely on general CPU affinity hints. By considering the underlying cache-sharing structure of the hardware, it helps to reduce L2 cache contention, especially critical in multi-tenant environments. Additionally, this method supports performance isolation for high-priority VMs that require minimal interference from other workloads. Where necessary, it also allows for efficient oversubscription, balancing performance with resource constraints.

Altogether, combining module-awareness with CPU placement hints results in adaptive, high-performance vCPU allocation that aligns with modern virtualization needs. It enhances cache locality, reduces contention, and ensures better performance predictability for a wide range of workloads.

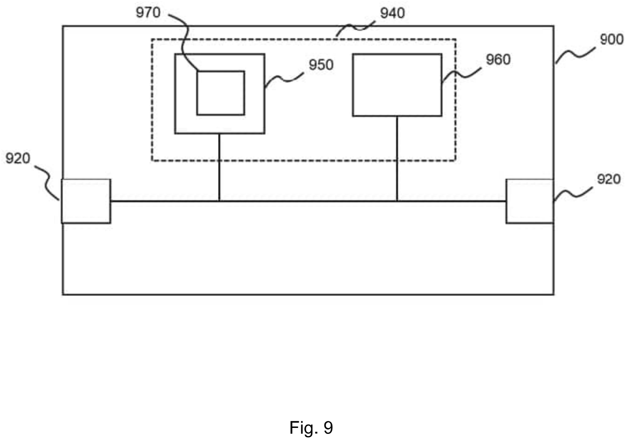

Fig. 9 illustrates a block diagram of apparatus 900 of an example of the application.

In some examples, apparatus 900 may include interfaces 920, such as 920a and 920b, and processing circuitry 940. Apparatus 900 may be configured to implement, based on the cooperations between one or more tangible computer-readable ("machine-readable") non-transitory storage medium 950 and one or more processors 960 of the processing circuitry 940, operations and/or functionalities described with reference to the Figs. 1 to 8. For example, the operations and/or functionalities may include each and every operation of methods 100, 100A, 200 and 200A. The storage medium 950 may include all the machine-readable instructions for implementing methods 100, 100A, 200 and 200A. In some examples, medium may refer to memory or media.

In some examples, apparatus 900 may perform the above implementations when the computer-executable instructions, such as the logic or computer program 970, are executed by one or more processors 960. In some examples, the interfaces 920 are interface means 920 and the processing circuitry 940 is processing means 940.

In some examples, the interfaces 920 may be configured to communicate with other apparatuses. In some examples, interfaces 920 may include one or more wireless interfaces including antennas, such as MIMO antennas, and/or wired interfaces, such as USB serial interfaces and/or RJ45 interfaces. The wireless interfaces may be configured to transmit and/or receive Wi-Fi signals, 3GPP signals and/or other wireless signals. The wired interfaces may be configured to receive signals transmitted via fiber, coaxial cables and other mediums.

In some examples, one or more processors 960 may be General Purpose CPUs, Mobile Processors, Server and Data Center Processors, Embedded Processors, Graphics Processing Units (GPUs), Specialized Processors, Microcontrollers, Field-Programmable Gate Arrays (FPGAs), Digital Signal Processors (DSPs), application-specific integrated circuits (ASICs), integrated circuits (ICs) and/or other circuitries having the capability of performing the operations of the controller in each and every example of this disclosure.

In some examples, the phrase "computer-readable non-transitory storage medium" may be directed to include all machine and/or computer readable medium, with the sole exception being a transitory propagating signal.

In some examples, the storage medium 950 may include one or more types of computer-readable storage medium capable of storing data, including volatile memory, non-volatile memory, removable or non-removable memory, erasable or non-erasable memory, writeable or re-writeable memory, and the like. For example, storage medium 950 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some examples, the logic or computer program 970 may include instructions, data, and/or code, which, if executed by a machine, such as implemented by one or more processors in an apparatus, may cause the machine to perform a method, process, and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some examples, each of components 920, 940, 950, 960 and 970 in the apparatus 900 may be implemented by a corresponding means capable of implementing the functions of the above components. In some examples, storage media 950 is not included in apparatus 900 because processors 960 may read logic or computer program 970 from a storage media out of apparatus 900.

In some examples, the logic or computer program 970 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner, or syntax, for instructing a processor to perform a certain function. The instructions may be implemented using any suitable high-level, low-level, object- oriented, visual, compiled and/or interpreted programming language, such as C, C++, Java, BASIC, Matlab, Pascal, Visual BASIC, assembly language, machine code, and the like.

In some examples, interfaces 920, storage media 950 and processors 960 communicate with each other via bus. In some other examples, some of these entities have direct communicative connections with each other.

In the following, some examples of the application are presented.

An example (e.g., example 1) relates to a non-transitory machine-readable storage medium storing machine-readable instructions that, when executed by one or more processors, cause the one or more processors to perform operations comprising:
obtaining a configuration policy that maps workload types to corresponding shared cache placement modes, the shared cache placement modes including one or more strict shared modes and one or more relaxed shared modes;
identifying a workload type of a workload associated with a virtual machine (VM);
determining, based on the configuration policy and the identified workload type, a shared cache placement mode for the VM; and
assigning virtual CPUs (vCPUs) of the VM to hardware processing cores selected based on the determined shared cache placement mode.

An example (e.g., example 2) relates to a previously described example (e.g., example 1) or to any of the examples described herein, where in each of the shared cache placement modes, the vCPUs are assigned to a plurality of hardware processing cores sharing a common cache resource, wherein the plurality of cores, each assigned a vCPU, are distributed across a plurality of modules.

An example (e.g., example 3) relates to a previously described example (e.g., example 2) or to any of the examples described herein, where in each of the strict shared modes, each vCPU is assigned to a distinct hardware processing core, and each vCPU is fixed to a different hardware processing core.

An example (e.g., example 4) relates to a previously described example (e.g., any one of examples 1 to 3) or to any of the examples described herein, where in each of the relaxed shared modes, each vCPU is assigned to a distinct hardware processing core and is migratable to a different hardware processing core, wherein the migration is within one module.

An example (e.g., example 5) relates to a previously described example (e.g., any one of examples 1 to 4) or to any of the examples described herein, where oversubscription is implemented in at least one of the shared cache placement modes, the oversubscription referring to a case where m vCPUs are assigned to n hardware processing cores, with m > n, such that two or more vCPUs are scheduled on one hardware processing core at different time slots.

An example (e.g., example 6) relates to a previously described example (e.g., any one of examples 1 to 5) or to any of the examples described herein, where the configuration policy maps at least one of a server-side workload or an in-memory database workload to one of the strict shared modes.

An example (e.g., example 7) relates to a previously described example (e.g., example 6) or to any of the examples described herein, where the strict shared mode mapped to at least one of the server-side workload or the in-memory database workload is a 2-module strict shared mode, where all vCPUs for the workload are assigned to 2 modules.

An example (e.g., example 8) relates to a previously described example (e.g., any one of examples 1 to 7) or to any of the examples described herein, where the configuration policy maps an artificial intelligence (AI) inference workload to one of the relaxed shared modes.

An example (e.g., example 9) relates to a previously described example (e.g., example 8) or to any of the examples described herein, where the relaxed shared mode mapped to the AI inference workload is an 8-module relaxed shared mode, where all vCPUs for the workload are assigned to 8 modules.

An example (e.g., example 10) relates to a previously described example (e.g., any one of examples 1 to 9) or to any of the examples described herein, where the operations further comprise:
performing analysis on performance metrics of VMs whose vCPUs are assigned based on the configuration policy; and
updating the configuration policy based on the analysis.

An example (e.g., example 11) relates to a previously described example (e.g., example 10) or to any of the examples described herein, where the performance metrics comprise one or more of: cache hit rate, execution throughput, latency, or vCPU migration frequency.

An example (e.g., example 12) relates to a previously described example (e.g., any one of examples 1 to 11) or to any of the examples described herein, where the cache used in the shared cache placement modes comprises L2 cache.

An example (e.g., example 13) relates to a non-transitory machine-readable storage medium including machine-readable instructions that, when executed by one or more processors, cause the one or more processors to perform operations comprising:
determining performance metrics of a plurality of workloads of different types, each workload being run in different shared cache placement modes, wherein the shared cache placement modes include one or more strict shared modes and one or more relaxed shared modes;
determining, based on the performance metrics, a preferred shared cache placement mode for each workload type; and
generating a configuration policy mapping each workload type to its preferred shared cache placement mode.

An example (e.g., example 14) relates to a previously described example (e.g., example 13) or to any of the examples described herein, where in each of the shared cache placement modes, vCPUs of a virtual machine (VM) implementing a workload are assigned to a plurality of hardware processing cores sharing a common cache resource, wherein the plurality of cores, each assigned a vCPU, are distributed across a plurality of modules.

An example (e.g., example 15) relates to a previously described example (e.g., example 14) or to any of the examples described herein, where in each strict shared mode, each vCPU is assigned to a distinct hardware processing core and is disallowed to migrate to a different hardware processing core.

An example (e.g., example 16) relates to a previously described example (e.g., example 14) or to any of the examples described herein, where in each relaxed shared mode, each vCPU is assigned to a distinct hardware processing core and is allowed to migrate to a different core within one module.

An example (e.g., example 17) relates to a previously described example (e.g., any one of examples 13 to 16) or to any of the examples described herein, where oversubscription is implemented in at least one of the shared cache placement modes, such that m vCPUs are assigned to n hardware processing cores, with m > n, such that two or more vCPUs are scheduled on one hardware processing core at different time slots.

An example (e.g., example 18) relates to a previously described example (e.g., any one of examples 13 to 17) or to any of the examples described herein, where the operations further comprise: performing analysis on performance metrics of VMs whose vCPUs are assigned based on the configuration policy; and updating the configuration policy based on the analysis.

An example (e.g., example 19) relates to a previously described example (e.g., any one of examples 13 to 18) or to any of the examples described herein, where the configuration policy maps at least one of a server-side workload or an in-memory database workload to a strict shared mode.

An example (e.g., example 20) relates to a previously described example (e.g., example 19) or to any of the examples described herein, where the strict shared mode mapped to at least one of the server-side workload or the in-memory database workload is a 2-module strict shared mode, where all vCPUs for the workload are assigned to 2 modules.

An example (e.g., example 21) relates to a previously described example (e.g., any one of examples 13 to 20) or to any of the examples described herein, where the configuration policy maps an artificial intelligence (AI) inference workload to one of the relaxed shared modes.

An example (e.g., example 22) relates to a previously described example (e.g., example 21) or to any of the examples described herein, where the relaxed shared mode mapped to the Al inference workload is an 8-module relaxed shared mode, where all vCPUs for the Al inference workload are assigned to 8 modules.

An example (e.g., example 23) relates to a previously described example (e.g., any one of examples 13 to 22) or to any of the examples described herein, where the performance metrics comprise one or more of: cache hit rate, execution throughput, latency, or vCPU migration frequency.

An example (e.g., example 24) relates to a previously described example (e.g., any one of examples 13 to 23) or to any of the examples described herein, where the configuration policy is sent to an entity configured to perform vCPU assignment based on the configuration policy.

An example (e.g., example 25) relates to a method comprising:
obtaining a configuration policy that maps workload types to corresponding shared cache placement modes, the shared cache placement modes including one or more strict shared modes and one or more relaxed shared modes;
identifying a workload type of a workload associated with a virtual machine (VM);
determining, based on the configuration policy and the identified workload type, a shared cache placement mode for the VM; and
assigning virtual CPUs (vCPUs) of the VM to hardware processing cores selected based on the determined shared cache placement mode.

An example (e.g., example 26) relates to a previously described example (e.g., example 25) or to any of the examples described herein, where in each shared cache placement mode, the vCPUs are assigned to a plurality of hardware processing cores that share a common cache resource, and where the hardware processing cores are distributed across a plurality of modules.

An example (e.g., example 27) relates to a previously described example (e.g., example 26) or to any of the examples described herein, where in each of the strict shared modes, each vCPU is assigned to a distinct hardware processing core and is fixed to that core.

An example (e.g., example 28) relates to a previously described example (e.g., any one of examples 25 to 27) or to any of the examples described herein, where in each of the relaxed shared modes, each vCPU is assigned to a distinct hardware processing core and is allowed to migrate to another core within the same module.

An example (e.g., example 29) relates to a previously described example (e.g., any one of examples 25 to 28) or to any of the examples described herein, where oversubscription is implemented in at least one of the shared cache placement modes, such that m vCPUs are assigned to n hardware processing cores, with m > n, and two or more vCPUs are scheduled on one core at different time slots.

An example (e.g., example 30) relates to a previously described example (e.g., any one of examples 25 to 29) or to any of the examples described herein, where the configuration policy maps at least one of a server-side workload or an in-memory database workload to a strict shared mode.

An example (e.g., example 31) relates to a previously described example (e.g., example 30) or to any of the examples described herein, where the strict shared mode mapped to the server-side workload or in-memory database workload is a 2-module strict shared mode, in which all vCPUs are assigned to two modules.

An example (e.g., example 32) relates to a previously described example (e.g., any one of examples 25 to 31) or to any of the examples described herein, where the configuration policy maps an artificial intelligence (AI) inference workload to one of the relaxed shared modes.

An example (e.g., example 33) relates to a previously described example (e.g., example 32) or to any of the examples described herein, where the relaxed shared mode mapped to the Al inference workload is an 8-module relaxed shared mode, in which all vCPUs are distributed across 8 modules.

An example (e.g., example 34) relates to a previously described example (e.g., any one of examples 25 to 33) or to any of the examples described herein, where the method further comprises:
performing analysis on performance metrics of VMs whose vCPUs are assigned based on the configuration policy; and
updating the configuration policy based on the analysis.

An example (e.g., example 35) relates to a previously described example (e.g., example 34) or to any of the examples described herein, where the performance metrics comprise one or more of: cache hit rate, execution throughput, latency, or vCPU migration frequency.

An example (e.g., example 36) relates to a previously described example (e.g., any one of examples 25 to 35) or to any of the examples described herein, where the shared cache used in the placement modes comprises an L2 cache.

An example (e.g., example 37) relates to a method comprising:
determining performance metrics of a plurality of workloads of different types, each workload being run in different shared cache placement modes, wherein the shared cache placement modes include one or more strict shared modes and one or more relaxed shared modes;
determining, based on the performance metrics, a preferred shared cache placement mode for each workload type; and
generating a configuration policy mapping each workload type to its preferred shared cache placement mode.

An example (e.g., example 38) relates to a previously described example (e.g., example 37) or to any of the examples described herein, where in each of the shared cache placement modes, vCPUs of a virtual machine (VM) implementing a workload are assigned to a plurality of hardware processing cores sharing a common cache resource, wherein the plurality of cores, each assigned a vCPU, are distributed across a plurality of modules.

An example (e.g., example 39) relates to a previously described example (e.g., example 38) or to any of the examples described herein, where in each strict shared mode, each vCPU is assigned to a distinct hardware processing core and each vCPU is disallowed to migrate to a different hardware processing core.

An example (e.g., example 40) relates to a previously described example (e.g., example 38) or to any of the examples described herein, where in each relaxed shared mode, each vCPU is assigned to a distinct hardware processing core and is allowed to migrate to a different hardware processing core, wherein the migration is within one module.

An example (e.g., example 41) relates to a previously described example (e.g., any one of examples 37 to 40) or to any of the examples described herein, where oversubscription is implemented in at least one of the shared cache placement modes, the oversubscription referring to a case where m vCPUs are assigned to n hardware processing cores, with m > n, such that two or more vCPUs are scheduled on one hardware core at different time slots.

An example (e.g., example 42) relates to a previously described example (e.g., any one of examples 37 to 41) or to any of the examples described herein, where the method further comprises:
performing analysis on performance metrics of VMs whose vCPUs are assigned based on the configuration policy; and
updating the configuration policy based on the analysis.

An example (e.g., example 43) relates to a previously described example (e.g., any one of examples 37 to 42) or to any of the examples described herein, where the configuration policy maps at least one of a server-side workload or an in-memory database workload to a strict shared mode.

An example (e.g., example 44) relates to a previously described example (e.g., example 43) or to any of the examples described herein, where the strict shared mode mapped to at least one of the server-side workload or the in-memory database workload is a 2-module strict shared mode, where all vCPUs for the workload are assigned to 2 modules.

An example (e.g., example 45) relates to a previously described example (e.g., any one of examples 37 to 44) or to any of the examples described herein, where the configuration policy maps an artificial intelligence (AI) inference workload to one of the relaxed shared modes.

An example (e.g., example 46) relates to a previously described example (e.g., example 45) or to any of the examples described herein, where the relaxed shared mode mapped to the Al inference workload is an 8-module relaxed shared mode, where all vCPUs for the Al inference workload are assigned to 8 modules.

An example (e.g., example 47) relates to a previously described example (e.g., any one of examples 37 to 46) or to any of the examples described herein, where the performance metrics comprise one or more of: cache hit rate, execution throughput, latency, or vCPU migration frequency.

An example (e.g., example 48) relates to a previously described example (e.g., any one of examples 37 to 47) or to any of the examples described herein, where the shared cache used in the shared cache placement modes comprises L2 cache.

An example (e.g., example 49) relates to an apparatus comprising one or more processors and a non-transitory machine-readable storage medium storing instructions that, when executed by the one or more processors, cause the one or more processors to perform operations comprising:
obtaining a configuration policy that maps workload types to corresponding shared cache placement modes, the shared cache placement modes including one or more strict shared modes and one or more relaxed shared modes;
identifying a workload type of a workload associated with a virtual machine (VM);
determining, based on the configuration policy and the identified workload type, a shared cache placement mode for the VM; and
assigning virtual CPUs (vCPUs) of the VM to hardware processing cores selected based on the determined shared cache placement mode.

An example (e.g., example 50) relates to a previously described example (e.g., example 49) or to any of the examples described herein, where in each shared cache placement mode, the vCPUs are assigned to a plurality of hardware processing cores that share a common cache resource, and the cores, each assigned a vCPU, are distributed across a plurality of modules.

An example (e.g., example 51) relates to a previously described example (e.g., example 50) or to any of the examples described herein, where in each strict shared mode, each vCPU is assigned to a distinct hardware processing core and is fixed to that core.

An example (e.g., example 52) relates to a previously described example (e.g., example 50) or to any of the examples described herein, where in each relaxed shared mode, each vCPU is assigned to a distinct hardware processing core and is allowed to migrate to a different hardware core within the same module.

An example (e.g., example 53) relates to a previously described example (e.g., any one of examples 49 to 52) or to any of the examples described herein, where oversubscription is implemented in at least one of the shared cache placement modes, the oversubscription referring to a case where m vCPUs are assigned to n hardware processing cores, with m > n, and two or more vCPUs are scheduled on one core at different time slots.

An example (e.g., example 54) relates to a previously described example (e.g., any one of examples 49 to 53) or to any of the examples described herein, where the configuration policy maps at least one of a server-side workload or an in-memory database workload to a strict shared mode.

An example (e.g., example 55) relates to a previously described example (e.g., example 54) or to any of the examples described herein, where the strict shared mode mapped to the server-side workload or in-memory database workload is a 2-module strict shared mode, where all vCPUs for the workload are assigned to 2 modules.

An example (e.g., example 56) relates to a previously described example (e.g., any one of examples 49 to 55) or to any of the examples described herein, where the configuration policy maps an artificial intelligence (AI) inference workload to one of the relaxed shared modes.

An example (e.g., example 57) relates to a previously described example (e.g., example 56) or to any of the examples described herein, where the relaxed shared mode mapped to the Al inference workload is an 8-module relaxed shared mode, where all vCPUs for the workload are assigned to 8 modules.

An example (e.g., example 58) relates to a previously described example (e.g., any one of examples 49 to 57) or to any of the examples described herein, where the apparatus is further configured to perform analysis on performance metrics of VMs whose vCPUs are assigned based on the configuration policy, and to update the configuration policy based on the analysis.

An example (e.g., example 59) relates to a previously described example (e.g., example 58) or to any of the examples described herein, where the performance metrics comprise one or more of: cache hit rate, execution throughput, latency, or vCPU migration frequency.

An example (e.g., example 60) relates to a previously described example (e.g., any one of examples 49 to 59) or to any of the examples described herein, where the shared cache used in the shared cache placement modes comprises L2 cache.

An example (e.g., example 61) relates to an apparatus comprising one or more processors and a non-transitory machine-readable storage medium storing instructions that, when executed by the one or more processors, cause the one or more processors to perform operations comprising:
determining performance metrics of a plurality of workloads of different types, each workload being run in different shared cache placement modes, wherein the shared cache placement modes include one or more strict shared modes and one or more relaxed shared modes;
determining, based on the performance metrics, a preferred shared cache placement mode for each workload type; and
generating a configuration policy mapping each workload type to its preferred shared cache placement mode.

An example (e.g., example 62) relates to a previously described example (e.g., example 61) or to any of the examples described herein, where in each of the shared cache placement modes, vCPUs of a virtual machine (VM) implementing a workload are assigned to a plurality of hardware processing cores sharing a common cache resource, wherein the plurality of cores, each assigned a vCPU, are distributed across a plurality of modules.

An example (e.g., example 63) relates to a previously described example (e.g., example 62) or to any of the examples described herein, where in each strict shared mode, each vCPU is assigned to a distinct hardware processing core and each vCPU is disallowed to migrate to a different hardware processing core.

An example (e.g., example 64) relates to a previously described example (e.g., example 62) or to any of the examples described herein, where in each relaxed shared mode, each vCPU is assigned to a distinct hardware processing core and is allowed to migrate to a different hardware processing core, wherein the migration is within one module.

An example (e.g., example 65) relates to a previously described example (e.g., any one of examples 61 to 64) or to any of the examples described herein, where oversubscription is implemented in at least one of the shared cache placement modes, the oversubscription referring to a case where m vCPUs are assigned to n hardware processing cores, with m > n, such that two or more vCPUs are scheduled on one hardware processing core at different time slots.

An example (e.g., example 66) relates to a previously described example (e.g., any one of examples 61 to 65) or to any of the examples described herein, where the apparatus is further configured to:
perform analysis on performance metrics of VMs whose vCPUs are assigned based on the configuration policy; and
update the configuration policy based on the analysis.

An example (e.g., example 67) relates to a previously described example (e.g., any one of examples 61 to 66) or to any of the examples described herein, where the configuration policy maps at least one of a server-side workload or an in-memory database workload to a strict shared mode.

An example (e.g., example 68) relates to a previously described example (e.g., example 67) or to any of the examples described herein, where the strict shared mode mapped to the server-side workload or in-memory database workload is a 2-module strict shared mode, where all vCPUs for the workload are assigned to 2 modules.

An example (e.g., example 69) relates to a previously described example (e.g., any one of examples 61 to 68) or to any of the examples described herein, where the configuration policy maps an artificial intelligence (AI) inference workload to one of the relaxed shared modes.

An example (e.g., example 70) relates to a previously described example (e.g., example 69) or to any of the examples described herein, where the relaxed shared mode mapped to the Al inference workload is an 8-module relaxed shared mode, where all vCPUs for the Al inference workload are assigned to 8 modules.

An example (e.g., example 71) relates to a previously described example (e.g., any one of examples 61 to 70) or to any of the examples described herein, where the performance metrics comprise one or more of: cache hit rate, execution throughput, latency, or vCPU migration frequency.

An example (e.g., example 72) relates to a previously described example (e.g., any one of examples 61 to 71) or to any of the examples described herein, where the apparatus is configured to transmit the configuration policy to an entity that performs vCPU assignment based on the configuration policy, and where the shared cache referenced in the policy comprises L2 cache.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

**It** is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

**If** some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A non-transitory medium storing machine-readable instructions that, when executed by one or more processors, cause the one or more processors to perform operations comprising:
obtaining a configuration policy that maps workload types to corresponding shared cache placement modes, the shared cache placement modes including one or more strict shared modes and one or more relaxed shared modes;
identifying a workload type of a workload associated with a virtual machine, VM;
determining, based on the configuration policy and the identified workload type, a shared cache placement mode for the VM; and
assigning virtual CPUs, vCPUs, of the VM to hardware processing cores selected based on the determined shared cache placement mode.

2. The medium of claim 1, wherein in each of the shared cache placement modes, the vCPUs are assigned to a plurality of hardware processing cores sharing a common cache resource, wherein the plurality of hardware processing cores, each assigned a vCPU, are distributed across a plurality of modules.

3. The medium of claim 1 or 2, wherein in each of the strict shared modes, each vCPU is assigned to a distinct hardware processing core, and each vCPU is fixed to a different hardware processing core.

4. The medium of any one of claims 1 to 3, wherein in each of the relaxed shared modes, each vCPU is assigned to a distinct hardware processing core and is migratable to a different hardware processing core, wherein the migration is within one module.

5. The medium of any one of claims 1 to 4, wherein oversubscription is implemented in at least one of the shared cache placement modes, the oversubscription referring to a case where m vCPUs are assigned to n hardware processing cores, with m>n, such that two or more vCPUs are scheduled on one hardware processing core at different time slots.

6. The medium of any one of claims 1 to 5, wherein the configuration policy maps at least one of a server-side workload or an in-memory database workload to one of the strict shared modes.

7. The medium of claim 6, wherein the strict shared mode mapped to at least one of the server-side workload or the in-memory database workload is a 2-module strict shared mode, where all vCPUs for the server-side workload or the in-memory database workload are assigned to 2 modules.

8. The medium of any one of claims 1 to 7, wherein the configuration policy maps an artificial intelligence (AI) inference workload to one of the relaxed shared modes.

9. The medium of any one of claims 1 to 8, wherein the operations further comprise:
performing analysis on performance metrics of VMs whose vCPUs are assigned based on the configuration policy; and
updating the configuration policy based on the analysis.

10. The medium of any one of claims 1 to 9, wherein the cache is L2 cache.

11. A non-transitory medium storing machine-readable instructions that, when executed by one or more processors, cause the one or more processors to perform operations comprising:
determining performance metrics of a plurality of workloads of different types, each workload being run in different shared cache placement modes, wherein the different shared cache placement modes include one or more strict shared modes and one or more relaxed shared modes;
determining, based on the performance metrics, a preferred shared cache placement mode for each workload type; and
generating a configuration policy mapping each workload type to its preferred shared cache placement mode.

12. The medium of claim 11, wherein in each of the shared cache placement modes, vCPUs of a VM implementing a workload are assigned to a plurality of hardware processing cores sharing a common cache resource, wherein the plurality of hardware processing cores, each assigned a vCPU, are distributed across a plurality of modules.

13. The medium of claim 12, wherein in each of the strict shared modes, each vCPU is assigned to a distinct hardware processing core and each vCPU is disallowed to migrate to a different hardware processing core.

14. The medium of claim 12, wherein in each of the relaxed shared modes, each vCPU is assigned to a distinct hardware processing core and is allowed to migrate to a different hardware processing core, wherein the migration is within one module.

15. The medium of any one of claims 11 to 14, wherein oversubscription is implemented in at least one of the shared cache placement modes, the oversubscription referring to a case where m vCPUs are assigned to n hardware processing cores, with m>n, such that two or more vCPUs are scheduled on one hardware processing core at different time slots.
